# EUROPÄISCHE PATENTSCHRIFT

(11) **EP 1 529 429 B1**
(45) Veröffentlichungstag und Bekanntmachung des Hinweises auf die Patenterteilung: **28.06.2006**
(21) Anmeldenummer: 04023863.6
(22) Anmeldetag: 07.10.2004
(51) Int. Cl.: A01B 71/08, F16D 3/84

(54) **Schutzanordnung**
Protection device
Dispositif de protection

(30) Priorität: 05.11.2003 DE 10352162
(43) Veröffentlichungstag der Anmeldung: 11.05.2005
(73) Patentinhaber: GKN Walterscheid GmbH, 53797 Lohmar (DE)
(72) Erfinder: Herchenbach, Paul, 53809 Ruppichteroth (DE); Coenen, Herbert, 53639 Königswinter (DE); Stommel, Markus, 53721 Siegburg (DE)
(74) Vertreter: Harwardt, Günther

(56) Entgegenhaltungen:
- EP-A1- 0 802 342
- WO-A1-01/16501
- DE-A1- 3 223 864
- DE-C1- 10 153 822
- US-A- 5 971 858

## Beschreibung

Die Erfindung betrifft eine Schutzanordnung für ein Gelenk, insbesondere Doppelkreuzgelenk, für den Antrieb von oder Antrieben in landwirtschaftlichen Geräten und Arbeitsmaschinen, umfassend
- ein erstes Schutzelement mit einem ringförmigen Abschnitt mit einer ersten Stirnkante, das auf seinem Außenumfang mit ersten Befestigungsmitteln versehen ist,
- ein ringförmiges zweites Schutzelement, das auf einem Außenumfang zweite Befestigungsmittel und das eine zweite Stirnkante aufweist,
- ein drittes Schutzelement aus einem Elastomer, das an einem ersten ringförmigen Ende erste Verbindungsmittel zur Verbindung mit den ersten Befestigungsmitteln und an einem zweiten ringförmigen Ende zweite Verbindungsmittel zur Verbindung mit den zweiten Befestigungsmitteln und dazwischen einen umlaufenden Mantelabschnitt mit Durchbrüchen oder mit einer Gitterstruktur, der mindestens eine Falte bildet, aufweist.

Solche Schutzanordnungen dienen als Berührungsschutz und werden über Verbindungsmittel ortsfest gehalten, so dass das von der Schutzanordnung umschlossene Gelenk darin rotieren kann. Die Schutzanordnung rotiert nicht und soll einen Kontakt von Personen mit drehenden Bauteilen vermeiden.

Eine solche Schutzanordnung ist in der DE 101 53 822 C1 beschrieben. Die Schutzanordnung umfasst ein erstes Schutzelement mit einem ringförmigen Abschnitt mit einer ersten Stirnkante und ist auf seinem Außenumfang mit ersten Befestigungsmitteln in Form eines Kragens versehen. Es ist ein ringförmiges zweites Schutzelement in Form eines Anschlusselementes vorgesehen. Zwischen dem ersten Schutzelement und dem zweiten Schutzelement ist ein drittes Schutzelement angeordnet, das aus einem Elastomer hergestellt ist und an einem ersten ringförmigen Ende hakenartige erste Verbindungsmittel zur Verbindung mit den ersten Befestigungsmitteln in Form des Kragens aufweist. An einem zweiten ringförmigen Ende des dritten Schutzelementes sind zweite Verbindungsmittel zur Verbindung mit den zweiten Befestigungsmitteln am Anschlusselement versehen. Das Anschlusselement weist eine Sitzfläche als zweite Befestigungsmittel auf, auf denen ein dem dritten Schutzelement zugehöriger Bund, der geschlitzt ist und über Schrauben im Durchmesser reduziert werden kann als zweite Verbindungsmittel festsetzbar ist. Das dritte Schutzelement ist im Bereich zwischen dem ersten ringförmigen Ende und dem zweiten ringförmigen Ende mit einer Falte gestaltet, wobei das erste Befestigungsende und das zweite Befestigungsende durchmessermäßig unterschiedlich ausgelegt ist. Die Falte verläuft in einem Radialschnitt bezüglich der Längsachse und wird entweder je nach Abwinklung des Gelenkes auf einem Teil des Umfanges gestreckt und auf einem weiteren Teil des Umfanges zusammengedrückt. In dem Mantelabschnitt zwischen dem ersten ringförmigen Abschnitt und dem zweiten ringförmigen Abschnitt des dritten Schutzelementes befinden sich Durchbrüche. Der Mantelabschnitt kann auch eine Gitterstruktur aufweisen und bildet mindestens eine Falte.

Bei der Abwinklung des Gelenkes wirken aufgrund der Streckung und des Zusammendrückens erhebliche Kräfte auf die Befestigungsmittel bzw. Verbindungsmittel.

Es ist Aufgabe der Erfindung, die Verbindung des dritten Schutzelements mit dem ersten bzw. zweiten Schutzelement so zu gestalten, dass eine sichere Halterung gegeben ist.

Gelöst wird diese Aufgabe erfindungsgemäß dadurch, dass
- die ersten Befestigungsmittel des ersten Schutzelements aus dem Außenumfang des ersten Schutzelements, der ersten Stirnkante nahe, umfangsverteilt angeformten, über den Außenumfang vorstehenden ersten Halteansätzen gebildet sind, welche zumindest über einen der ersten Stirnkante entfernten Umfangsabschnitt eine Nut bilden und über einen der ersten Stirnkante nahen Umfangskantenabschnitt einen hinterschnittenen Umfangskantenabschnitt oder einen über die erste Stirnkante vorstehenden Stützlappen bilden,
- die zweiten Befestigungsmittel des zweiten Schutzelements aus dem Außenumfang des zweiten Schutzelementes, der zweiten Stirnkante nahe, umfangsverteilt angeformten, über den Außenumfang vorstehenden zweiten Halteansätzen gebildet sind, welche zumindest über einen der zweiten Stirnkante nahen ersten Umfangskantenbereich eine zweite Nut bilden und über einem der zweiten Stirnkante entfernten zweiten Umfangskantenbereich einen hinterschnittenen Abschnitt oder eine Rille bilden,
- die ersten Verbindungsmittel und die zweiten Verbindungsmittel Halteabschnitten zugeordnet sind, die dem dritten Schutzelement endseitig angeformt sind und die eine der Anzahl der ersten Halteansätze und zweiten Halteansätze entsprechende Anzahl von ersten Durchbrüchen und zweiten Durchbrüchen aufweisen, die von den Halteansätzen durchgriffen werden und deren Begrenzungskantenabschnitte jeweils zumindest in die zugehörige Nut eingreifen.

Von Vorteil bei dieser Ausbildung ist, dass rundum eine sichere Halterung zwischen dem dritten Schutzelement und dem ersten Schutzelement einerseits und dem dritten Schutzelement und dem zweiten Schutzelement andererseits gegeben ist, wobei auch gewährleistet ist, dass ein Lösen praktisch nur durch Einsatz von Werkzeugen möglich ist, damit ein ungewolltes Entfernen des dritten Schutzelementes, das einen Eingriffsschutz bieten soll, weitestgehend vermieden wird und nur dann wissentlich mit dem Einsatz von Werkzeugen entfernt werden kann, wenn eine Reparatur oder Wartung an dem Gelenk oder an Bauteilen der Schutzanordnung vorzunehmen ist.

In Ausgestaltung der Erfindung ist vorgesehen, dass die dem ersten Schutzelement zugehörigen ersten Halteansätze in ihrem der ersten Stirnkante nahen Bereich in Umfangsrichtung des Außenumfangs länger ausgebildet sind als in dem der ersten Stirnkante entfernten dritten Umfangskantenabschnitt. Diese Maßnahme bewirkt sowohl bei der Streckung als auch bei der Stauchung des Mantelabschnittes des dritten Schutzelementes eine günstige Krafteinleitung.

Um die Montage günstig zu gestalten, ist vorgesehen, dass die Halteansätze im der ersten Stirnkante nahen Bereich in Umfangsrichtung des Außenumfangs des zugehörigen Schutzelements seitlich durch parallele und nutenfreie erste Umfangskantenabschnitte und daran anschließend von der Stirnkante weg mit aufeinander zu verlaufenden zweiten Umfangskantenabschnitten mit einer Nut versehen sind.

Eine günstige Krafteinleitung ergibt sich insbesondere, wenn die aufeinander zu verlaufenden zweiten Umfangskantenabschnitte durch einen dritten Umfangskantenabschnitt in Form eines Bogenabschnitts verbunden sind, der ebenfalls eine Nut aufweist.

Vorzugsweise ist vorgesehen, dass die dem ersten Schutzelement oder insbesondere dem zweiten Schutzelement zugehörigen ersten oder zweiten Halteansätze vorzugsweise in einer Draufsicht eine annähernd rechteckige Grundform aufweisen, wobei die in Umfangsrichtung des Außenumfangs des zugehörigen Schutzelements parallelen Umfangskantenbereiche kürzer ausgebildet sind als die parallel zu einer von dem zugehörigen Schutzelement gebildeten Längsachse verlaufenden Umfangskantenbereiche. Hierbei ist es günstig, wenn die zur Verbindung mit den Halteansätzen vorgesehenen Halteabschnitte in Umfangsrichtung durch jeweils einen Haltesteg getrennte Durchbrüche umfassen. Es ergibt sich eine Art Gitterstruktur.

Eine günstige Kraftverteilung wird erreicht, wenn die ersten Durchbrüche Bestandteil von entsprechend den ersten Halteansätzen umfangsverteilt angeordneten laschenförmigen ersten Halteabschnitten sind. Vorzugsweise sind sechs solcher laschenförmigen ersten Halteabschnitte vorgesehen. Hieraus resultiert einerseits eine günstige Montierbarkeit und andererseits eine gute verteilte Krafteinleitung über den Umfang.

Zum Einsatz bei Gelenken ist insbesondere das erste Schutzelement durchmessermäßig größer zu bemessen als das zweite Schutzelement. Das dritte Schutzelement bildet in einem Radialschnitt gesehen eine Falte zwischen dem ersten Schutzelement und dem zweiten Schutzelement.

Für die gegenseitige Zuordnung der Schutzelemente ist vorgesehen, dass die erste Stirnkante des ersten Schutzelementes und die zweite Stirnkante des zweiten Schutzelementes im ungebeugten Zustand des Gelenkes in entgegengesetzte Richtungen weisen.

Vorzugsweise ist vorgesehen, dass der Mantelabschnitt des dritten Schutzelementes Durchbrüche oder eine Gitterstruktur aufweist.

Ein bevorzugtes Ausführungsbeispiel der Erfindung ist in der Zeichnung schematisch dargestellt.

Es zeigt
- Figur 1: ein Gelenk in Form eines Doppelkreuzgelenkes mit einer erfindungsgemäßen Schutzanordnung, die halb in Ansicht und halb im Längsschnitt dargestellt ist,
- Figur 2: eine Draufsicht auf eine Abwicklung des ringförmigen Abschnittes des ersten Schutzelementes mit zwei ersten Halteansätzen,
- Figur 3: einen Schnitt III-III von Figur 2,
- Figur 4: einen zum Abschnitt gemäß Figur 2 passenden Umfangsabschnitt in abgewickelter Form mit zwei zu den ersten Halteansätzen passenden ersten Halteabschnitten mit ersten Durchbrüchen des dritten Schutzelementes,
- Figur 5: eine Draufsicht auf eine Abwicklung eines Abschnitts des zweiten Schutzelementes mit den zweiten Halteansätzen,
- Figur 6: einen Schnitt VI-VI gemäß Figur 5 und
- Figur 7: eine Draufsicht auf eine Abwicklung des zweiten ringförmigen Endes des dritten Schutzelementes mit den zweiten Durchbrüchen in den zweiten Halteabschnitten.

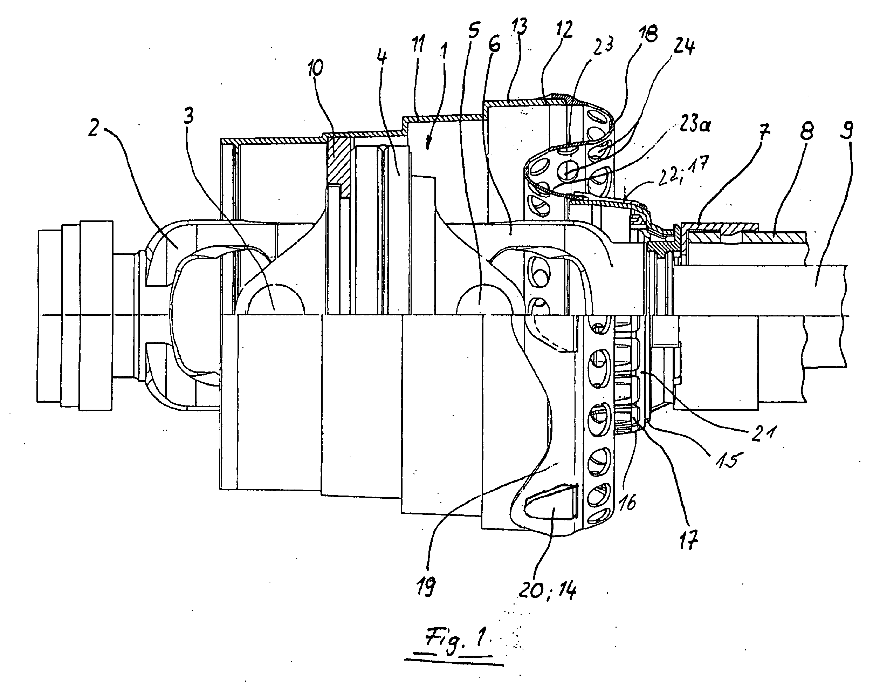

In Figur 1 ist ein Gelenk in Form eines Doppelkreuzgelenkes 1 ersichtlich, wobei die Schutzanordnung im Halblängsschnitt dargestellt ist. Das Doppelkreuzgelenk 1 weist eine Anschlussgabel 2 auf, die über ein erstes Zapfenkreuz 3 mit der entsprechenden Gelenkgabel eines Gehäuses 4 verbunden ist. Dieses trägt eine weitere Gelenkgabel, die über ein zweites Zapfenkreuz 5 mit der Gelenkgabel 6 verbunden ist. An diese Gelenkgabel 6 ist ein Profilrohr 9 angeschlossen, dass zu einer Verschiebeanordnung gehört und über ein weiteres Profilrohr (nicht dargestellt) mit dem Profilrohr 9 teleskopartig und mit einer weiteren Gelenkanordnung verbunden ist. Auf der Gelenkgabel 6 ist ein Anschlusselement 7 angebracht, welches mit einem Schutzrohr 8 verbunden ist, das das Profilrohr 9 überdeckt. Ein Drehmoment wird beispielsweise über die Anschlussgabel 2, das Gehäuse 4 mit den beiden Gelenkgabein und die beiden Zapfenkreuze 35 auf die Gelenkgabel 6 und von dieser über das Profilrohr auf eine entsprechende Anordnung am anderen Ende der Gelenkwelle übertragen. Da bei landwirtschaftlichen Geräten und Arbeitsmaschinen solche Gelenkanordnungen häufig frei zugänglich sind, beispielweise wenn sie zur Weiterleitung der Drehbewegung von der Zapfwelle eines Traktors an ein angehängtes Gerät dienen, sind hierfür Schutzanordnungen vorgesehen. Diese Schutzanordnungen sind als stillstehender Schutz gestaltet, d. h. sie werden zwar von dem Gelenk getragen, rotieren beim Antrieb desselben nicht mit diesem, da sie über nicht dargestellte Mittel mit einem ortsfesten Teil des Gerätes verbunden werden. Die zur Schutzanordnung gehörenden Bauteile sind untereinander so verbunden, dass sie eine drehfeste Verbindung bewerkstelligen, so dass sämtliche Bauteile stillstehen.

Die erfindungsgemäße Schutzanordnung bezieht sich insbesondere auf den abzudeckenden Abschnitt einer Gelenkwelle im Bereich eines Gelenkes, beispielsweise in Form eines Doppelkreuzgelenkes 1.

Die Schutzanordnung umfasst ein erstes Schutzelement 11, beispielsweise aus Kunststoff, das mittels eines Lagerringes 10 am Gehäuse 4 des Gelenkes 1 drehbar gelagert ist. Es umfasst von der Anschlussgabel 2 weg einen ringförmigen Abschnitt 12 mit dem Außenumfang 13, dem umfangsverteilt erste Halteansätze 14 als erste Befestigungsmittel angeformt sind. Deren Ausbildung wird nachfolgend im Zusammenhang mit den Figuren 2 und 3 näher beschrieben.

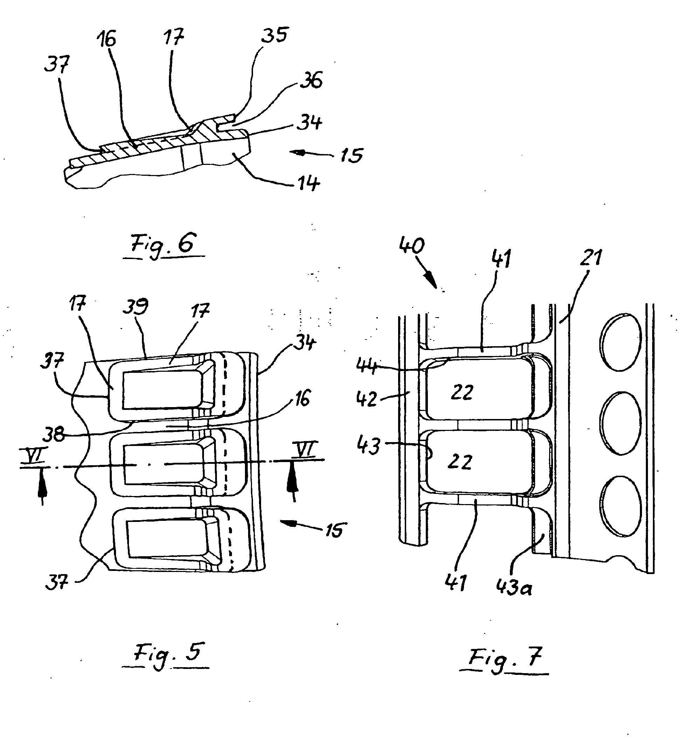

Es ist ein zweites Schutzelement 15 vorgesehen, das mit dem Anschlusselement 7 verbunden ist oder dessen Funktion auch noch umfassen kann. Das zweite Schutzelement 15 ist auf seinem Außenumfang 16 mit zweiten Halteansätzen 17 versehen. Die Ausbildung derselben ist wird nachfolgend anhand der Figuren 5 und 6 näher beschrieben.

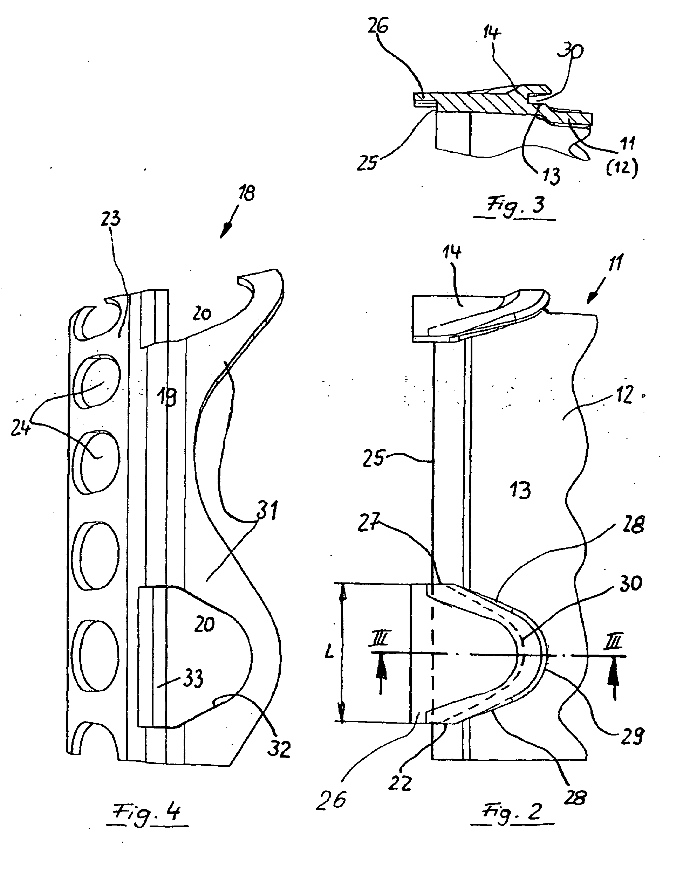

Zwischen dem ersten Schutzelement 11 und dem im Durchmesser kleineren zweiten Schutzelement 15 ist ein drittes Schutzelement 18 angeordnet, das ein erstes ringförmiges Ende 19 aufweist, mit dem es an den Außenumfang 13 des ersten Schutzelementes 11 anschließt. Es weist erste Durchbrüche 20 als erste Verbindungsmittel auf, die umfangsverteilt um die Längsachse X angeordnet sind und jeweils mit den ersten Halteansätzen 14 zusammenwirken. Deren Gestaltung wird näher in Zusammenhang mit Figur 4 nachfolgend beschrieben.

Das dritte Schutzelement 18 weist ein zweites ringförmiges Ende 21 auf, in dem zweite Durchbrüche 22 umfangsverteilt um die Längsachse X angeordnet sind, die mit den zweiten Halteansätzen 17 in Eingriff sind. Im Bereich zwischen dem ersten ringförmigen Ende 19 und dem zweiten ringförmigen Ende 21 ist ein Mantelabschnitt 23 vorgesehen, der in einem Radialschnitt, so wie er dargestellt ist, eine Falte 23a bildet. In dem Mantelabschnitt 23 sind darüber hinaus Durchbrüche 24 verteilt angeordnet. Der Mantelabschnitt 23 kann aber auch, wie im Zusammenhang mit DE 101 53 822 C1 beschrieben, eine Gitterstruktur aufweisen. Die Durchbrüche 24 bilden insgesamt eine Lochstruktur.

Das dritte Schutzelement 18 verhindert, dass in den zwischen dem ersten Schutzelement 11 und den Bauteilen des Gelenkes 1 gebildeten Freiraum, der für die Abwinklung des Gelenkes 1 erforderlich ist, von Hand eingegriffen werden kann. Die Lochstruktur mit den Durchbrüchen 24 ist entsprechend zur Verhinderung eines solchen Eingriffs gestaltet.

Nachfolgend wird zunächst die Verbindung zwischen dem ersten Schutzelement 11 und dem dritten Schutzelement 18 anhand der Figuren 2 bis 4 näher beschrieben, wobei Figur 2 einen Teil einer Abwicklung des ringförmigen Abschnittes 12 darstellt. Der ringförmige Abschnitt 12 des ersten Schutzelementes 11 mit dem Außenumfang 13 endet in einer ersten Stirnkante 25. Dem Außenumfang 13 dieses ringförmigen Abschnittes 12 des ersten Schutzelementes 11 sind umfangsverteilt erste Halteansätze 14 angeformt, die von dem Außenumfang 13 vorstehen und in einem der ersten Stirnkante 25 nahen Bereich angeordnet sind.

Dabei umfassen die ersten Halteansätze 14 jeweils einen Stützlappen 26, der über die erste Stirnkante 25 vorsteht. Dieser weist in Umfangsrichtung die Länge L auf. Vom Stützlappen 26 weg erstrecken sich, ausgehend von der ersten Stirnkante 25, zunächst zwei erste Umfangskantenabschnitte 27, die rechtwinklig zur Stirnkante 25 und parallel zueinander verlaufen und sich auch über den Stützlappen 26 erstrecken. Von diesen gehen jeweils zweite Umfangskantenabschnitte 28 aus, die aufeinander zu verlaufen und an ihrem, dem Stützlappen 26 entfernten Ende, durch einen Bogenabschnitt 29 verbunden sind, der einen dritten Umfangskantenabschnitt bildet. Über die zweiten Umfangskantenabschnitte 28 und den dritten Umfangskantenabschnitt 29 erstreckt sich eine erste Nut 30. Es sind vorzugsweise sechs solcher Halteansätze 14 umfangsverteilt vorgesehen. Von diesen ist lediglich ein Abschnitt mit zwei Halteansätzen 14 in der Abwinklung gemäß Figur 2 dargestellt.

In der Figur 4 ist das erste ringförmige Ende 19 des dritten Schutzelementes 18 in Form eines Abschnittes in Abwicklung dargestellt. Das dritte Schutzelement 18 ist im übrigen, damit eine genügende Flexibilität bei Abwinklung des Gelenkes 1 gegeben ist, aus einem Elastomer, insbesondere aus einem Thermoplast hergestellt.

Der in Figur 4 dargestellte Abschnitt umfasst zwei erste Halteabschnitte 31, die laschenartig gestaltet sind und von dem ersten ringförmigen Ende 19 vorstehen und in denen erste Durchbrüche 20 vorgesehen sind, die in ihrer Formgebung der Gestaltung der ersten Halteansätze 14 angepasst sind. Die ersten Durchbrüche 32 werden durch Begrenzungskantenabschnitte 32, 33 begrenzt, wobei gerade Abschnitte vorgesehen sind, die abmessungsmäßig mit dem Abstand L der parallel zueinander verlaufenden ersten Umfangskantenabschnitte 27 der ersten Halteansätze 14 angeordnet sind. Die beiden Begrenzungskantenabschnitte 32 greifen in die Nut 30 ein. Der Begrenzungskantenabschnitt 33 setzt sich unter den Stützlappen 26 und befindet sich im montierten Zustand zwischen der Unterseite des Stützlappens 26 und der Stirnkante 25. Hierdurch wird das dritte Schutzelement 18 mit den ersten Halteabschnitten 31 fest auf den ersten Halteansätzen 14 gehalten. Die parallelen ersten Umfangskantenabschnirte 27 dienen dazu, die Montage des dritten Schutzelementes 18 beim Ineingriffbringen der ersten Halteabschnitte 31 mit den ersten Halteeinsätzen 14 zu erleichtern.

In den Figuren 5 und 6 ist das zweite Schutzelement 15 mit einem Teil seines Außenumfanges 16 als Abwicklung bzw. im Schnitt dargestellt. Das zweite Schutzelement 15 ist ebenfalls ringförmig gestaltet und weist die zweite Stirnkante 34 auf, die im montierten Zustand der Bauteile der Schutzanordnung am Gelenk 1 der ersten Stirnkante 25 zugerichtet ist. Das bedeutet, dass die erste Stirnkante 25 und die zweite Stirnkante 34 im ungebeugten Zustand des Gelenkes 1 in entgegengesetzte Richtungen weisen.

Dem Außenumfang 16 des zweiten Schutzelementes 15 sind mehrere zweite Halteansätze 17 angeformt, die zweite Befestigungsmittel bilden und über den Außenumfang 16 nach außen vorstehend ausgebildet sind. Die zweiten Halteansätze 17 sind relativ dicht auf dem Umfang aufeinander folgend vorgesehen. Die zweiten Halteansätze 17 weisen im wesentlichen parallel zur Stirnkante 34, jedoch von dieser versetzt, jeweils einen ersten Umfangskantenbereich 35 auf, wobei ausgehend von diesem zwischen dem Außenumfang 16 und dem ersten Unfangskantenbereich 35 sich eine in Richtung zur zweiten Stirnkante 34 offene zweite Nut 36 befindet. Rechtwinklig zu dem ersten Umfangskantenbereich 35 schließen sich ein dritter Umfangskantenbereich 38 und ein vierter Umfangskantenbereich 39 an, die von der zweiten Stirnkante 34 weg verlaufen. Diese werden durch einen etwa parallel zum ersten Umfangskantenbereich 35 verlaufenden und der zweiten Stirnkante 34 entfernten zweiten Umfangskantenbereich 39 verbunden, der einen Hinterschnitt oder eine Rille bildet.

Der zugehörige Umfangsabschnitt des zweiten ringförmigen Endes 21 des dritten Schutzelementes 18 bildet zweite Halteabschnitte 41, die jeweils einen zweiten Durchbruch 22 für jeden zweiten Halteansatz 17 umfassen. Die zweiten Halteabschnitte 41 umfassen ferner zwischen je zwei auf dem Umfang aufeinanderfolgenden zweiten Durchbrüchen 22 einen Haltesteg 41 und einen Umfangssteg 42. Jeder zweite Durchbruch 22 ist durch parallele Begrenzungskantenabschnitte 43 und parallele Begrenzungskantenabschnitte 44 begrenzt, die dem zugehörigen zweiten Halteansatz 17 angepasst sind und einen Begrenzungskantenabschnitt 43a umfassen, der in die Nut 36 des zugehörigen zweiten Halteansatzes 17 eingreift. Die beiden Begrenzungskantenabschnitte 43 verlaufen parallel zueinander und sind der inneren Begrenzungskante der zweiten Nut 36 bzw. dem zweiten Umfangskantenbereich 37 angepasst. Die beiden parallel zueinander verlaufenden Begrenzungskantenabschnitte 44 wirken mit dem dritten und vierten Umfangskantenbereich 38, 39 zusammen.

Die Haltestege 41 sind zwischen zwei auf dem Umfang aufeinander folgenden zweiten Halteansätzen 17 aufgenommen. Der Umfangssteg 42 setzt sich hinter den zweiten Umfangskantenabschnitt 37 der Halteansätze 17. Die Begrenzungskantenabschnitte 43a sichern insbesondere den Sitz des dritten Schutzelementes 18 ebenso wie der Begrenzungskantenabschnitt 33 beim aufeinander zu bewegen der beiden Stirnkanten 25, 34. Die anderen Bereiche sichern den Sitz beim Auftreten von Zugkräften aufgrund einer Streckung des dritten Schutzelementes 18 im Bereich der Falte 23a.

### Bezugszeichenliste

- 1: Doppelkreuzgelenk
- 2: Anschlussgabel
- 3: erstes Zapfenkreuz
- 4: Gehäuse
- 5: zweites Zapfen kreuz
- 6: Gelenkgabel
- 7: Anschlusselement
- 8: Schutzrohr
- 9: Profilrohr
- 10: Lagerring
- 11: erstes Schutzelement
- 12: ringförmiger Abschnitt
- 13: Außenumfang
- 14: erste Halteansätze/erste Befestigungsmittel
- 15: zweites Schutzelement
- 16: Außenumfang
- 17: zweite Halteansätze/zweite Befestigungsmittel
- 18: drittes Schutzelement
- 19: erstes ringförmiges Ende
- 20: erster Durchbruch/erste Verbindungsmittel
- 21: zweites ringförmiges Ende
- 22: zweiter Durchbruch/zweite Verbindungsmittel
- 23: Mantelabschnitt
- 23a: Falte
- 24: Durchbrüche
- 25: erste Stirnkante
- 26: Stützlappen
- 27: erster Umfangskantenabschnitt
- 28: zweiter Umfangskantenabschnitt
- 29: Bogenabschnitt (dritter Umfangskantenabschnitt)
- 30: erste Nut
- 31: erste Halteabschnitte
- 32: Begrenzungskantenabschnitt
- 33: Begrenzungskantenabschnitt
- 34: zweite Stirnkante
- 35: erster Umfangskantenbereich
- 36: zweite Nut
- 37: zweiter Umfangskantenbereich
- 38: dritter Umfangskantenbereich
- 39: vierter Umfangskantenbereich
- 40: zweiter Halteabschnitt
- 41: Haltesteg
- 42: Umfangssteg
- 43, 43a: Begrenzungskantenabschnitt
- 44: Begrenzungskantenabschnitt

## Patentansprüche

1. Schutzanordnung für ein Gelenk, insbesondere Doppelkreuzgelenk (1), für den Antrieb von oder Antriebe in landwirtschaftlichen Geräten und Arbeitsmaschinen umfassend
- ein erstes Schutzelement (11) mit einem ringförmigen Abschnitt (12) mit einer ersten Stirnkante (25), das auf seinem Außenumfang (13) mit ersten Befestigungsmitteln (14) versehen ist,
- ein ringförmiges zweites Schutzelement (15), das auf einem Außenumfang (16) zweite Befestigungsmittel (17) und das eine zweite Stirnkante (34) aufweist,
- ein drittes Schutzelement (18) aus einem Elastomer, das an einem ersten ringförmigen Ende (19) erste Verbindungsmittel (20) zur Verbindung mit den ersten Befestigungsmitteln (14) und an einem zweiten ringförmigen Ende (21) zweite Verbindungsmittel (22) zur Verbindung mit den zweiten Befestigungsmitteln (17) und dazwischen einen umlaufenden Mantelabschnitt (23) mit Durchbrüchen (24) oder mit einer Gitterstruktur, der mindestens eine Falte (23a) bildet, aufweist,
**dadurch gekennzeichnet, dass**
- die ersten Befestigungsmittel des ersten Schutzelements (11) aus dem Außenumfang (13) des ersten Schutzelements (11), der ersten Stirnkante (25) nahe, umfangsverteilt angeformten, über den Außenumfang (13) vorstehenden ersten Halteansätzen (14) gebildet sind,
welche zumindest über einen der ersten Stirnkante (25) entfernten Umfangsabschnitt (29) eine Nut (30) bilden und über einen der ersten Stirnkante (25) nahen Umfangskantenabschnitt einen hinterschnittenen Umfangskantenabschnitt oder einen über die erste Stirnkante (25) vorstehenden Stützlappen (26) bilden,
- die zweiten Befestigungsmittel des zweiten Schutzelements (15) aus dem Außenumfang (16) des zweiten Schutzelementes (15), der zweiten Stirnkante (34) nahe, umfangsverteilt angeformten, über den Außenumfang (16) vorstehenden zweiten Halteansätzen (17) gebildet sind, welche zumindest über einen der zweiten Stirnkante (34) nahen ersten Umfangskantenbereich (35) eine zweite Nut (36) bilden und über einem der zweiten Stirnkante (34) entfernten zweiten Umfangskantenbereich (37) einen hinterschnittenen Abschnitt oder eine Rille bilden,
- die ersten Verbindungsmittel (20) und die zweiten Verbindungsmittel (22) Halteabschnitten (31, 40) zugeordnet sind, die dem dritten Schutzelement (18) endseitig angeformt sind und die eine der Anzahl der ersten Halteansätze (14) und zweiten Halteansätze (17) entsprechende Anzahl von ersten Durchbrüchen (20) und zweiten Durchbrüchen (22) aufweisen, die von den Halteansätzen (14, 17) durchgriffen werden und deren Begrenzungskantenabschnitte (32, 43a, 44) jeweils zumindest in die zugehörige Nut (30 bzw. 36) eingreifen.

2. Schutzanordnung nach Anspruch 1,
**dadurch gekennzeichnet,**
**dass** die dem ersten Schutzelement (11) zugehörigen ersten Halteansätze (14) in ihrem der ersten Stirnkante (25) nahen Bereich in Umfangsrichtung des Außenumfangs länger ausgebildet sind als in dem der ersten Stirnkante (25) entfernten dritten Umfangskantenabschnitt (29).

3. Schutzanordnung nach einem der Ansprüche 1 oder 2,
**dadurch gekennzeichnet,**
**dass** die Halteansätze (14) im der ersten Stirnkante (25) nahen Bereich in Umfangsrichtung des Außenumfangs (13) des zugehörigen Schutzelements (11) seitlich durch parallele und nutenfreie erste Umfangskantenabschnitte (27) und daran anschließend von der ersten Stirnkante (25) weg mit aufeinander zu verlaufenden zweiten Umfangskantenabschnitten (28) mit einer Nut (30) versehen sind.

4. Schutzanordnung nach Anspruch 3,
**dadurch gekennzeichnet,**
**dass** die aufeinander zu verlaufenden zweiten Umfangskantenabschnitte (28) durch einen dritten Umfangskantenabschnitt in Form eines Bogenabschnitts (29) verbunden sind, der ebenfalls eine Nut (30) aufweist.

5. Schutzanordnung nach Anspruch 1,
**dadurch gekennzeichnet,**
**dass** die dem ersten Schutzelement oder zweiten Schutzelement (14) zugehörigen ersten oder zweiten Halteansätze (17) in einer Draufsicht eine annähernd rechteckige Grundform aufweisen, wobei die in Umfangsrichtung des Außenumfangs (16) des zugehörigen Schutzelements (14) parallelen Umfangskantenbereiche (35, 37) kürzer ausgebildet sind als die parallel zu einer von dem zugehörigen Schutzelement (15) gebildeten Längsachse (X) verlaufenden Umfangskantenbereiche (38, 39).

6. Schutzanordnung nach Anspruch 5,
**dadurch gekennzeichnet,**
**dass** die zur Verbindung mit den Halteansätzen (17) vorgesehenen Halteabschnitte (40) in Umfangsrichtung durch jeweils einen Haltesteg (41) getrennte Durchbrüche (22) umfassen.

7. Schutzanordnung nach Anspruch 1,
**dadurch gekennzeichnet,**
**dass** die ersten Durchbrüche (20) Bestandteil von entsprechend den ersten Halteansätzen (14) umfangsverteilt angeordneten laschenförmigen ersten Halteabschnitten (31) sind.

8. Schutzanordnung nach einem der Ansprüche 1 bis 7,
**dadurch gekennzeichnet,**
**dass** das erste Schutzelement (11) durchmessermäßig größer bemessen ist als das zweite Schutzelement (14) und dass das dritte Schutzelement (18) in einem Radialschnitt gesehen eine Falte (23a) zwischen dem ersten Schutzelement (11) und dem zweiten Schutzelement (14) bildet.

9. Schutzanordnung nach Anspruch 1,
**dadurch gekennzeichnet,**
**dass** die erste Stirnkante (25) und die zweite Stirnkante (34) im ungebeugten Zustand des Gelenkes (1) in entgegengesetzte Richtungen weisen.

10. Schutzanordnung nach Anspruch 1,
**dadurch gekennzeichnet,**
**dass** der Mantelabschnitt (23) des dritten Schutzelementes (18) Durchbrüche (24) oder eine Gitterstruktur aufweist.

## Claims

1. Protection arrangement for a joint, especially a double universal joint (1), for driving of or in drives of agricultural implements and self-propelled implements, comprising
- a first protection element (11), having an annular portion (12) with a first front edge (25), provided on its outer circumference (13) with first attachment means (14),
- an annular second protection element (15), having on an outer circumference (16) second attachment means (17) and having a second front edge (34),
- a third protection element (18) made from elastomer, having on a first annular end (19) first connection means (20) for connecting to the first attachment means (14) and on a second annular end (21) second connection means (22) for connecting to the second attachment means (17) and therebetween a circumferential extending envelope portion (23) with through holes (24) or with a lattice structure, which envelope portion (23) forming at least one fold (23a),
**characterised in that**
- the first attachment means of the first protection element (11) are formed by first holding projections (14) projectingly formed on the outer circumference (13) of the first protection element (11) close to the first front edge (25) and circumferentially distributed along the outer circumference (1l),
which form at least along a circumferential portion (29) which is distanced to the first front edge (25) a groove (30) and form along a circumferential portion close to the first front edge (25) an undercut circumferential edge portion or a support tab (26) projecting beyond the first front edge (25),
- the second attachment means of the second protection element (15) are formed by second holding projections (17), circumferentially distributed and projectingly formed on the outer circumference (16) of the second protection element (15), close to the second front edge (34), and which holding projections (17) form at least along a first circumferential edge portion (35), close to the second front edge (34), a second groove (36) and form along a second circumferential edge portion (37) distanced to the second front edge (34) an undercut portion or a groove,
- the first connection means (20) and the second connection means (22) are arranged to holding portions (31, 40), which are formed to an end of the third protection element (18) and having a number of first through holes (20) and second through holes (22) corresponding to the number of first holding projections (14) and second holding projections (17) and engaged by the holding projections (14, 17) and which boundary edge portions (32, 43a, 44) engage, respectively, at least in the corresponding groove (30 or 36).

2. Protection arrangement according to claim 1,
**characterised in that**
the first holding projections (14) belonging to the first protection element (11) are formed longer in their first portion close to the first front edge (25) in circumferential direction of the outer circumference than in the third circumferential edge portion (29) distanced to the first front edge (25).

3. Protection arrangement according to one of claims 1 or 2,
**characterised in that**
the holding projections (14) in the area close to the first front edge (25) are provided in circumferential direction of the outer circumference (13) of the corresponding protection element (11) laterally with parallel first circumferential edge portions (27), which are free of grooves, and following thereto away from the first front edge (25) with second circumferential edge portions (28) having a groove (30) approaching each other.

4. Protection arrangement according to claim 3,
**characterised in that**
the second circumferential edge portions (28) approaching each other are connected by a third circumferential edge portion in form of an arc portion (29), which has also a groove (30).

5. Protection arrangement according to claim 1,
**characterised in that**
the first or second holding projections (17) belonging to the first protection element or second protection element (14) have in a top view an approximately rectangular basic form, wherein the circumferential edge portions (35, 37) arranged parallel in the circumferential direction of the outer circumference (16) of the corresponding protection element (14) are formed shorter than the circumferential edge portions (38, 39) extending parallel to a longitudinal axis (X) formed by the corresponding protection element (15).

6. Protection arrangement according to claim 5,
**characterised in that**
the holding portions (40) provided for connection to the holding projections (17) comprise in circumferential direction through holes (22) separated, respectively, by one holding web (41).

7. Protection arrangement according to claim 1,
**characterised in that**
the first through holes (20) are part of tab-like first holding portions (31) arranged circumferentially distributed correspondingly to the first holding projections (14).

8. Protection arrangement according to one of claims 1 to 7,
**characterised in that**
the first protection element (11) is dimensioned concerning the diameter larger than the second protection element (14) and that the third protection element (18) forms, when seen in a radial section, a fold (23a) between the first protection element (11) and the second protection element (14).

9. Protection arrangement according to claim 1,
**characterised in that**
the first front edge (25) and the second front edge (34) face in opposite directions in the non-articulated condition of the joint (1).

10. Protection arrangement according to claim 1,
**characterised in that**
the envelope portion (23) of the third protection element (18) has through holes (24) or a lattice structure.

## Revendications

1. Dispositif de protection pour une articulation, en particulier une articulation à double croisillon (1) pour l'entraînement ou pour les entraînements dans des appareils et machines de travail agricoles, comprenant :
un premier élément protecteur (11) avec un tronçon annulaire (12) présentant une première arête frontale (25), qui est pourvu à sa périphérie extérieure (13) de premiers moyens de fixation (14),
-- un second élément protecteur annulaire (15) qui est pourvu à sa périphérie extérieure (16) de seconds moyens de fixation (17) et qui présente une deuxième arête frontale (34),
-- un troisième élément protecteur (18) en élastomère qui comprend à une première extrémité annulaire (19) des premiers moyens de liaison (20) pour la liaison avec les premiers moyens de fixation (14) et qui comprend à une deuxième extrémité annulaire (21) des seconds moyens de liaison (22) pour la liaison avec les seconds moyens de fixation (17) et, entre ceux-ci, un tronçon enveloppe périphérique (23) avec des traversées (24) ou avec une structure grillagée, qui forme au moins un pli (23a),
**caractérisé en ce que**
-- les premiers moyens de fixation du premier élément protecteur (11) sont formés par des premiers talons de maintien (14) conformés de façon répartie sur la périphérie extérieure (13) du premier élément protecteur (11), proche de la première arête frontale (25), en dépassement au-delà de la périphérie extérieure (13), lesquels forment, au moins sur un tronçon périphérique (29) éloigné de la première arête frontale (25), une gorge (30), et forment sur un tronçon d'arête périphérique proche de la première arête frontale (25) un tronçon d'arête périphérique en contre-dépouille ou bien une patte de soutien (26) qui dépasse au-delà de la première arête frontale (25),
-- les seconds moyens de fixation du second élément protecteur (15) sont formés par des seconds talons de maintien (17) conformés de façon répartie sur la périphérie extérieure (16) du second élément protecteur (15), proche de la seconde arête frontale (34), en dépassement au-delà de la périphérie extérieure (16), lesquels forment, au moins sur un tronçon périphérique (35) proche de la seconde arête frontale (34), une seconde gorge (36) et forment sur un second tronçon d'arête périphérique (37) éloigné de la seconde arête frontale (34) un tronçon en contre-dépouille ou une rainure,
-- aux premiers moyens de liaison (20) et aux seconds moyens de liaison (22) sont associés des tronçons de maintien (31, 40) qui sont conformés du côté de l'extrémité du troisième élément protecteur (18) et qui comportent un nombre de premières traversées (20) et de deuxièmes traversées (22) correspondant au nombre des premiers talons de maintien (14) et des seconds talons de maintien (17), lesquelles sont traversées par les talons de maintien (14, 17) et dont les tronçons d'arête de délimitation (32, 43a, 44) s'engagent respectivement au moins dans la gorge associée (30 ou 36).

2. Dispositif de protection selon la revendication 1,
**caractérisé en ce que**
les premiers talons de maintien (14) associés au premier élément protecteur (11) sont réalisés, dans leur région proche de la première arête frontale (25), plus longs en direction périphérique de la périphérie extérieure que dans le troisième tronçon d'arête périphérique (29) éloigné de la première arête frontale (25).

3. Dispositif de protection selon l'une des revendications 1 ou 2,
**caractérisé en ce que**
les talons de maintien (14), dans la région proche de la première arête frontale (25) dans la direction périphérique de la périphérie extérieure (13) de l'élément protecteur associé (11), sont prévus latéralement par des premiers tronçons d'arête périphérique (27) parallèles et dépourvus de gorge, et à la suite de ceux-ci, en s'éloignant de la première arête frontale (25), par des seconds tronçons d'arête périphérique (28) convergents l'un vers l'autre avec une gorge (3 0).

4. Dispositif de protection selon la revendication 3,
**caractérisé en ce que**
les seconds tronçons d'arête périphérique (28) convergents l'un vers l'autre, sont reliés par un troisième tronçon d'arête périphérique sous la forme d'un tronçon d'arc (29) qui présente également une gorge (30).

5. Dispositif de protection selon la revendication 1,
**caractérisé en ce que**
les premiers ou les seconds talons de maintien (17) associés au premier élément protecteur ou au second élément protecteur (14) présentent en vue de dessus une forme de base approximativement rectangulaire, les régions d'arête périphérique parallèles (35, 37) en direction périphérique de la périphérie extérieure (16) de l'élément protecteur associé (14) étant réalisées plus courtes que les régions d'arête périphérique (38, 39) qui s'étendent parallèlement à un axe longitudinal (X) formé par l'élément protecteur associé (15).

6. Dispositif de protection selon la revendication 5,
**caractérisé en ce que**
les tronçons de maintien (40) prévus pour la liaison avec les talons de maintien (17) englobent des traversées (22) qui sont séparées en direction périphérique à chaque fois par une barrette de maintien (41).

7. Dispositif de protection selon la revendication 1,
**caractérisé en ce que**
les premières traversées (20) font partie de premiers tronçons de maintien (31) en forme de pattes agencés en répartition périphérique de façon correspondante aux premiers talons de maintien (14).

8. Dispositif de protection selon l'une des revendications 1 à 7,
**caractérisé en ce que**
le premier élément protecteur (11) a un diamètre choisi plus grand que le second élément protecteur (14), et **en ce que** le troisième élément protecteur (18) forme, vu dans une coupe radiale, un pli (23a) entre le premier élément protecteur (11) et le second élément protecteur (14).

9. Dispositif de protection selon la revendication 1,
**caractérisé en ce que**
la première arête frontale (25) et la seconde arête frontale (34) sont tournées dans des directions opposées dans l'état non fléchi de l'articulation (1).

10. Dispositif de protection selon la revendication 1,
**caractérisé en ce que**
le tronçon enveloppe (23) du troisième élément protecteur (18) comporte des traversées (24) ou une structure grillagée.
